**Europäisches Patentamt**

**European Patent Office**

**Office européen des brevets**

(11) Veröffentlichungsnummer: **0 002 667**
**A1**

(12) **EUROPÄISCHE PATENTANMELDUNG**

(21) Anmeldenummer: **78101435.2**

(22) Anmeldetag: **22.11.78**

(51) Int. Cl.²: **F 16 C 13/04,** F 16 B 3/00

(30) Priorität: **08.12.77 DE 7737439 U**

(43) Veröffentlichungstag der Anmeldung: **11.07.79**
**Patentblatt 79/14**

(84) Benannte Vertragsstaaten: **BE CH FR GB**

(71) Anmelder: **Polysius AG, Graf-Galen-Strasse 17,
D-4720 Beckum (DE)**

(72) Erfinder: **Korte, Bernd, Ennigerstrasse 63, D-4722
Ennigerloh (DE)**

(74) Vertreter: **Tetzner, Volkmar, Dr.-Ing. Dr. jur., Van-
Gogh-Strasse 3, D-8000 München 71 (DE)**

(54) **Drehtrommel.**

㊲ Befestigung eines Laufringes (2) auf dem Mantel (1) einer Drehtrommel unter Verwendung von Keilen (8), die mit einer Verlängerung (9) durch einen am Trommelmantel vorgesehenen Sicherungsblock (11) hindurchgreifen und sich an diesem Sicherungsblock über ein Sicherungselement (12) abstützen.

ACTORUM AG

**EP 0 002 667 A1**

**Dr.-Ing. Dr. jur. VOLKMAR TETZNER**

RECHTSANWALT und PATENTANWALT

Van-Gogh-Straße 3
8000 MÜNCHEN 71
Telefon: (089) 79 88 03
Telegramme: „Tetznerpatent München"
Telex: 5 212 282 pate d

0002667

P 4044/1

## Drehtrommel

Die Erfindung betrifft eine Drehtrommel, deren Mantel auf der Außenseite wenigstens einen Laufring trägt, der unter Zwischenanordnung von Keilen mit dem Trommelmantel verbunden ist.

Bekannte Drehtrommeln sind mittels ihrer Laufringe auf Stützrollen drehbar gelagert, die auf dem Fundament angeordnet sind.

Um einen Laufring auf dem Drehtrommelmantel festzulegen, sind einerseits an den Stirnseiten des Laufringes Begrenzungsringe und andererseits zwischen dem Innenumfang des Laufringes und der Außenseite des Drehtrommelmantels Keile vorgesehen. Diese sich in Achsrichtung der Drehtrommel verjüngenden Keile müssen von Zeit zu Zeit durch weiteres Einschlagen nachgezogen werden. Sie werden in ihrer jeweiligen Lage durch Begrenzungsbleche gegen Herausfallen gesichert. Diese üblicherweise auf die Außenseite des Drehtrommelmantels aufgeschweißten Begrenzungsbleche müssen nun vor jedem erneuten Nachziehen der Keile in umständlicher Weise entfernt und anschließend in der neuen Lage wieder befestigt werden.

Der Erfindung liegt daher die Aufgabe zugrunde, eine Drehtrommel der eingangs genannten Art so auszubilden, daß die Keile im Bedarfsfall auf einfache Weise nachgezogen und rasch sowie zuverlässig gesichert werden können.

Diese Aufgabe wird erfindungsgemäß dadurch gelöst, daß für jeden Keil am Trommelmantel ein Sicherungsblock angebracht ist, der eine Ausnehmung zum Durchgriff einer Keilverlängerung aufweist, die ein sich am Sicherungsblock abstützendes Sicherungselement trägt.

Erfindungsgemäß kommen die bekannten Keilbegrenzungsbleche vollständig in Fortfall. Die zwischen Laufring und Drehtrommelmantel angeordneten Keile können trotzdem auf einfache Weise nachgezogen und in ihrer neuen Position gesichert werden. Zu diesem Zweck muß lediglich das sich am Sicherungsblock abstützende Sicherungselement in seine sich durch das Nachziehen des Keiles ergebende neue Sicherungsposition nachgestellt werden.

Gemäß einer zweckmäßigen Ausgestaltung der Erfindung weist die Keilverlängerung an ihrem durch die Ausnehmung des Sicherungsblockes hindurchgreifenden Ende ein Schraubengewinde auf, auf das eine als Sicherungselement dienende Schraubenmutter aufgeschraubt ist. Hierdurch ergibt sich eine denkbar einfache und stufenlos nachstellbare Sicherung für den Keil.

Weitere zweckmäßige Ausgestaltungen der Erfindung sind Gegenstand der Unteransprüche und werden anhand der in der Zeichnung dargestellten Ausführungsbeispiele der Erfindung erläutert. Es zeigen

Fig.1    einen Teilquerschnitt durch den einen Laufring tragenden Bereich eines Drehtrommelmantels;

Fig.2    eine Längsschnittansicht gemäß der Linie II-II in Fig.1;

Fig.3    eine Teil-Aufsicht auf den Drehtrommelmantel gemäß der Linie III-III in Fig.2;

Fig.4    eine ähnliche Längsschnittansicht wie Fig.2, jedoch für ein anderes Ausführungsbeispiel der Erfindung.

In der Zeichnung ist jeweils nur der zum Verständnis der Erfindung wesentliche Teil einer Drehtrommel dargestellt.

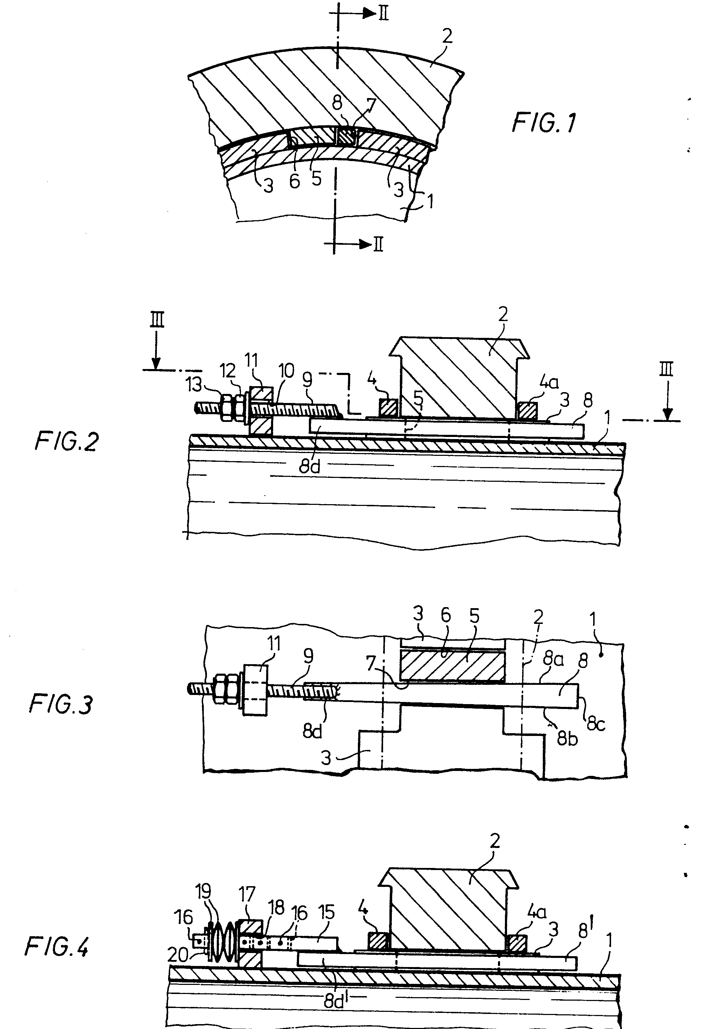

Die in den Fig.1 bis 3 als erstes Ausführungsbeispiel veranschaulichte Drehtrommel enthält einen Drehtrommelmantel 1, der einen Laufring 2 trägt. Zu diesem Zweck weist der Drehtrommelmantel 1 eine Anzahl von in Umfangsrichtung mit Abstand voneinander angeordneten, durch Unterlagbleche 3 gebildeten Vorsprüngen auf. Zu beiden Stirnseiten stehen in Trommelumfangsrichtung etwas schmaler ausgebildete, axiale Verlängerungen 3a, 3b der Unterlagbleche 3 vor, auf denen Begrenzungsringe 4,

- 4 -

4a festgelegt sind. Diese den beiden Stirnseiten des Laufringes 2 zugeordneten Begrenzungsringe sollen den Laufring in seiner axialen Lage auf den Drehtrommelmantel 1 halten.

Der Laufring 2 weist an seinem Innenumfang zahnartig angeordnete, radial nach innen vorstehende Mitnehmer 5 auf, die in die Zwischenräume 6 eingreifen, die zwischen den zahnarrtig angeordneten radialen Vorsprüngen (Unterlagbleche 3) des Drehtrommelmantels 1 vorhanden sind.

In den Zwischenraum 7 zwischen einem Unterlagblech 3 und einem Laufringmitnehmer 5 ist jeweils ein Keil 8 eingeschlagen, dessen mit dem Unterlagblech 3 bzw. mit dem Mitnehmer 5 in Berührung stehende Seiten 8a, 8b sich in Richtung der Trommelachse verjüngen (vgl. Fig.3). Der Keil 8 kann im Bedarfsfalle dadurch nachgezogen werden, daß mit einem Hammer gegen die Stirnfläche 8c seines verbreiterten Endes geschlagen wird.

Der Keil 8 besitzt in Achsrichtung eine Verlängerung 9, die durch eine Ausnehmung 10 eines auf der Außenseite des Drehtrommelmantels 1 angebrachten, vorzugsweise angeschweißten Sicherungsblockes 11 durchgreift. Diese Keilverlängerung 9 trägt ein Sicherungselement 12, das sich am Sicherungsblock 11 abstützt. Der eingeschlagene Keil 8 kann infolgedessen unter dem Laufring 2 nicht herausrutschen, andererseits jedoch ohne Lösen des Sicherungselementes 12 ohne weiteres fester eingetrieben werden.

- 5 -

Beim Ausführungsbeispiel der Fig.1 bis 3 ist die Keilverlängerung 9 an ihrem durch die Ausnehmung 10 des Sicherungsblockes 11 hindurchgreifenden Ende mit einem Schraubengewinde versehen. Vorzugsweise ist die ganze Keilverlängerung 9 durch eine Gewindestange gebildet, die auf das verjüngte Ende 8d des Keiles 8 aufgeschweißt ist. Das Sicherungselement 12 wird durch eine Schraubenmutter gebildet,die durch eine Kontermutter 13 gesichert ist.

Der Sicherungsblock 11 ist mit ausreichend großem axialen Abstand von der einen Stirnseite des Laufringes 2 auf die Außenseite des Trommelmantels 1 aufgeschweißt. Die Durchgangsbohrung 10 ist in Querschnittsform und -größe der Keilverlängerung 9 angepaßt.

Bei dem in Fig.4 veranschaulichten zweiten Ausführungsbeispiel der Erfindung sind für gleiche Elemente dieselben Bezugszeichen verwendet. Auf das verjüngte Ende 8b' des Keiles 8' ist hier eine Verlängerung 15 aus glattem Rund- oder Flachstahl aufgeschweißt. Diese Keilverlängerung 15 weist in relativ kurzen axialen Abständen etwa senkrecht zur Längsachse verlaufende Durchgangsbohrungen 16 auf, wobei vorzugsweise benachbarte Durchgangsbohrungen 16 jeweils etwa rechtwinklig zueinander liegen. Der Sicherungsblock 17 ist in gleicher Weise wie beim ersten Ausführungsbeispiel auf die Außenseite des Drehtrommelmantels 1 aufgeschweißt. Auf dem durch die Durchgangsöffnung 18 des Sicherungsblockes 17 hindurchragenden freien Ende der Keilverlängerung 15 sind mehrere sich am Sicherungsblock abstützende Unterlag- und/oder Federscheiben 19 angeordnet, die von einem Stift (Splint oder dgl.) 20, der durch eine der Durchgangsbohrungen 16 hindurchgreift, in ihrer Sicherungslage gehalten sind.

Abweichend von den dargestellten und beschriebenen Ausführungsbeispielen können selbstverständlich die Keilverlängerungen jeweils auch am dickeren Keilende angebracht sein, wobei sich dann das zugehörige Sicherheitselement an der dem Laufring zugewandten Seite des Sicherungsblockes abstützt.

Patentansprüche:

1. Drehtrommel, deren Mantel auf der Außenseite wenigstens einen Laufring trägt, der unter Zwischenanordnung von Keilen mit dem Trommelmantel verbunden ist, dadurch g e k e n n z e i c h n e t , daß für jeden Keil (8, 8') am Trommelmantel (1) ein Sicherungsblock (11, 17) angebracht ist, der eine Ausnehmung (10; 18) zum Durchgriff einer Keilverlängerung (9, 15) aufweist, die ein sich am Sicherungsblock abstützendes Sicherungselement (12, 19, 20) trägt.

2. Drehtrommel nach Anspruch 1, dadurch gekennzeichnet, daß die Keilverlängerung (9) zumindest an ihrem durch die Ausnehmung (10) des Sicherungsblockes (11) hindurchgreifenden Ende ein Schraubengewinde aufweist, auf das eine als Sicherungselement dienende Schraubenmutter (12) aufgeschraubt ist.

3. Drehtrommel nach Anspruch 2, dadurch gekennzeichnet, daß die Keilverlängerung (9) durch eine auf das entsprechende Keilende (8d) aufgeschweißte Gewindestange (9) gebildet ist.

4. Drehtrommel nach Anspruch 2, dadurch gekennzeichnet, daß die Schraubenmutter (12) durch eine Kontermutter (13) gesichert ist.

- 2 -

5. Drehtrommel nach Anspruch 1, dadurch gekennzeichnet, daß die Keilverlängerung (15) aus glattem Rund- oder Flachstahl hergestellt ist und in relativ kurzen axialen Abständen etwa senkrecht zur Längsachse verlaufende Durchgangsbohrungen (16) aufweist, wobei die Keilverlängerung mehrere sich am Sicherungsblock abstützende Unterleg- und/oder Federscheiben (19) trägt, die von einem durch eine der Durchgangsbohrungen hindurchgesteckten Stift, Splint oder dergleichen (20) in ihrer Lage gesichert sind.

6. Drehtrommel nach wenigstens einem der vorhergehenden Ansprüche, dadurch gekennzeichnet, daß die Keilverlängerung )9, 15) auf das verjüngte Ende (8d, 8d') des Keiles (8, 8') aufgeschweißt ist.

7. Drehtrommel nach den Ansprüchen 1 bis 5, dadurch gekennzeichnet, daß die Ausnehmung (10, 18) des Sicherungsblockes (11, 17) durch eine der Querschnittsform und -größe der Keilverlängerung (9, 15) entsprechende Durchgangsöffnung gebildet ist.

8. Drehtrommel nach wenigstens einem der vorhergehenden Ansprüche, dadurch gekennzeichnet, daß der Sicherungsblock (11, 17) mit axialem Abstand auf die Außenseite des Drehtrommelmantels (1) aufgeschweißt ist.

9. Drehtrommel nach den vorhergehenden Ansprüchen, dadurch gekennzeichnet, daß der Laufring (2) an seinem Innenumfang zahnartig angeordnete, radial nach innen vorstehende Mitnehmer (5) aufweist, die in Zwischenräume (6) eingreifen, die auf der Außenseite des Drehtrommelmantels (1) zwischen zahnartig angeordneten radialen Vorsprüngen (3) vorhanden sind, und daß die Keile (8, 8') in zwischen den Vorsprüngen und den Mitnehmern befindliche Zwischenräume (7) nachziehbar eingeschlagen sind und sich ihre mit den Vorsprüngen und Mitnehmern in Berührung stehenden Seiten (8a, 8b) in Achsrichtung der Drehtrommel verjüngen.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – A – 1 932 873 (MIAG MUEHLEN-BAU) <br><br> * Seite 5, Zeilen 11-16; Figuren 1,2 * | 1 |
| | DE – A – 1 634 716 (BOEHLER & CO) <br><br> * Seite 2, Zeilen 9-11; Figuren 2,4 * | 1,2,7 |
| | DE – C – 26 300 (GALLOIS) <br> * Seite 1, rechte Spalte, Zeilen 1-4; Figur 1 * | 1,2,6 |
| | DE – B – 1 273 268 (POLYSIUS AG) <br> * Spalte 3, Zeilen 25-30; Figuren 1,2 * | 1,9 |
| | FR – A – 2 089 034 (POLYSIUS AG) <br> * Seite 2, Zeilen 21-27; Figur 2 * | 1,9 |
| | FR – A – 2 311 591 (ELEX AG) <br> * Seite 3, Zeilen 10-14; Figur 2 * | 1 |
| A | FR – A – 1 188 322 (DURAND) <br> * Seite 2, rechte Spalte, Absatz 2; Figur 3 * | |

./.

**KLASSIFIKATION DER ANMELDUNG (Int.Cl.²)**

F 16 C 13/04
F 16 B  3/00

**RECHERCHIERTE SACHGEBIETE (Int. Cl.²)**

F 16 C 13/04
       13/02
       13/00
F 16 B  3/00
F 26 B 11/02
       11/04
F 27 B  7/22
B 02 C 17/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 15-03-1979 | Prüfer <br> BALDWIN |
|---|---|---|

EPA form 1503.1  06.78

| Europäisches Patentamt | EUROPÄISCHER RECHERCHENBERICHT | Nummer der Anmeldung |

## EINSCHLÄGIGE DOKUMENTE

## KLASSIFIKATION DER ANMELDUNG (Int.Cl.²)

| Kategorie | Kennzeichnung des Dokuments mit Angabe, soweit erforderlich, der maßgeblichen Teile | betrifft Anspruch |
|---|---|---|
| A | <u>DE - 0 - 2 611 610</u> (FRITZ STELLER) <br> * Seite 17, Zeilen 10-12; Figur 4 * | |

RECHERCHIERTE SACHGEBIETE (Int. Cl.²)

EPA Form 1503.2  06.78